# EUROPEAN PATENT APPLICATION

(11) **EP 0 692 734 A1**
(43) Date of publication of application: **17.01.1996**
(21) Application number: 95109132.1
(22) Date of filing: 13.06.1995
(51) Int. Cl.: G03C 3/00

(54) **Package for a rolled photosensitive material**

(30) Priority: 16.06.1994 JP 134368/94
(71) Applicant: KONICA CORPORATION, Tokyo 160 (JP)
(72) Inventor: Shikata, Shinji, c/o Konica Corp., Hino-shi, Tokyo (JP); Kasahara, Kazuo, c/o Konica Corp., Hino-shi, Tokyo (JP); Kobayashi, Hideo, c/o Konica Corp., Hino-shi, Tokyo (JP); Ono, Minako, c/o Konica Corp., Hino-shi, Tokyo (JP)
(74) Representative: Henkel, Feiler, Hänzel & Partner

(57) **Abstract**

A package for a rolled photosensitive material which includes: a cylindrical core, made of a light-shielding paper; a photosensitive material (2), rolled on the cylindrical core, for forming a roll portion; a pair of flanges (7), fixed on side ends of the cylindrical core, for preventing the roll portion from an exposure with light; and a leader member (3) for winding around the roll portion; in which the leader member includes: a first heat reversible resin film (4) which has a wider width than that of the roll portion, a thickness between 40 and 100 µm, light-shielding characteristics, and tensible elastic modulus between 1,800 and 5,000 kg/cm²; and a second heat reversible resin film (5) which has the same width as that of the roll portion, a thickness between 15 and 50 µm, and tensile elastic modulus between 20,000 and 45,000 kg/cm². In the package, the leader member is connected (6) to the trailing end of the photosensitive material, and the leader member (3) is wound around the roll portion so that the first heat reversible resin film (4) covers a circumference of the flanges (7) and extends to outer surfaces of the flanges for not less than 2 mm.

## Description

### BACKGROUND OF THE INVENTION

The present invention is related to a package for a rolled photosensitive material in which a photosensitive material, such as a photographic, make-up, or scanner film or printing paper, is wound around a core. In the package which is the type of loading under light, the rolled photosensitive material is set in a magazine or the like in such a manner that a leader portion of the photosensitive material can be drawn out from the magazine under light as the photosensitive material itself is shielded against light so that the leader portion becomes to a usable condition.

As the package for the rolled photosensitive material such as described above, Japanese Patent Publication Open to the Public Inspection No. 62-172344/1987 discloses the package which includes; a photosensitive material wound around a cylindrical core; side end covers for covering both side ends of the rolled photosensitive material; and a circumferential surface cover for covering outer circumferential surface of the rolled photosensitive material; in which a part of the side end overlaps alternately on the circumferential surface cover so as to shield the rolled photosensitive material against light.

It is also known a package for a roll in which the circumferential surface of the roll is lapped with a packaging sheet and both side ends of the packaging sheet are folded radially at the side end portions of the roll to be wound.

However, these packages have problems that it is difficult to make a part of the side end covers alternately overlap on the circumferential surface cover and to stablly adhere to each other; and it takes time to fold the both side ends of the packaging sheet at the side end portions of the roll to be wound.

### SUMMARY OF THE INVENTION

The present invention is to solve the above described problems. The objectives thereof are to provide a package for a rolled photosensitive material which is easy of production, excellent at light-shielding and protecting efficiency, and capable of drawing the photosensitive material in good and stable conditions easily and smoothly.

The present invention is of a package for a rolled photosensitive material which includes: a rolled photosensitive material body which consists of a cylindrical core member being made of light-shielding material, a photosensitive material rolled on the cylindrical core member to form a roll portion, and a pair of light-shielding flange members which are attached onto the side ends of the cylindrical core member in which a protruded portion from the circumferential part of the roll portion has a thickness between 0.3 and 1.0 mm, a bending strength not less than 250 kg/cm² (ASTM D790), and made of a heat reversible resin; a light-shielding leader member which is composed of the first heat reversible resin film member, having a wider width than that of the roll portion, a thickness between 40 and 100µm, light-shielding characteristics, and tensile elastic modules between 1,800 and 5,000 kg/cm² (ASTM D638), and the second heat reversible resin film member, having the same width as that of the roll portion, a thickness between 15 and 50 µm, and tensile elastic modules between 20,000 and 45,000 kg/cm², in which the light-shielding leader member is connected to the trailing end of the photosensitive material and has a length at least 1.5 times longer than the circumferential length of the roll portion; characterized in that the light-shielding leader member is wound around the roll portion so that the first heat reversible resin film member covers the circumference of the flange members and extends to the outer surfaces of the flange members for not less than 2 mm (ASTM: American Society for Testing and Materials). The present invention is also of a package for a rolled photosensitive material which includes: a cylindrical core member, made of light-shielding material; a photosensitive material rolled on the cylindrical core member to form a roll portion; light-shielding flange members each having a flange portion being protruded from the circumferential part of the roll portion and attached onto both side ends of the cylindrical core member; and a light-shielding leader member which has light-shielding characteristics, and consists of a composition of a heat reversible resin film member, having a wider width than that of the roll portion, and a heat reversible resin film member, having the same width as that of the roll portion, in which the light-shielding leader member is connected to the trailing end of the photosensitive material and the light-shielding leader member is wound around the roll portion so that the heat reversible resin film member, having the wider width than that of the roll portion, covers the circumference of the flange members and extends to the outer surfaces of the flange members for not less than 2 mm; characterized in that holder members are attached to the flange members in such a manner that a short cylindrical protrusion, protruded from the flat base of each of the holder members, is inserted into the cavity of the respective one of the flange members and the package for a rolled photosensitive material is accommodated in a box as it is prevented from contacting with the box. According to the above configurations of the package for a rolled photosensitive material, the aforementioned objectives are achieved.

Thus, in the package for a rolled photosensitive material according to the present invention, the photosensitive material is wound around a cylindrical core member, flange members are attached onto both ends of the cylindrical core member, a light-shielding leader member is attached to the trailing end of the photosensitive material, the light-shielding leader member is wound around the photosensitive material, and the trailing end of the light-shielding leader member is adhered to be fixed by a adhesive tape or the like. Further, the package for a rolled photosensitive material is produced by a simple process such that the holder members are attached on the flange members at the both sides of the cylindrical core member and the package for a rolled photosensitive material is accommodated in a box. By the light-shielding leader member and the flange members or further with the holders and the box, light shield and protection of the photosensitive material are assured safely; moreover, the remarkable effects, that the photosensitive material can be drawn from the package easily and smoothly, is obtained.

### BRIEF DESCRIPTION OF THE DRAWINGS

Fig. 1 is a perspective view the roll portion of the photosensitive material in which the light-shielding leader member is connected to the trailing end of the roll portion.

Fig. 2 is a perspective view of the flange members.

Fig. 3 is a perspective view of the rolled photosensitive material body in which the flange members are attached to the roll portion of Fig. 1.

Fig. 4 is a perspective view of the moment that the light-shielding leader member is being wound around the rolled photosensitive material body.

Fig. 5 is a plan view of the moment that the light-shielding leader member is being wound around the rolled photosensitive material body.

Fig. 6 is a perspective view of the package for a rolled photosensitive material according to the present invention.

Fig. 7 is a side view of the moment that the package for a rolled photosensitive material according to the present invention is being placed on a plane.

Fig. 8 is a perspective view of the moment that the package for a rolled photosensitive material according to the present invention is being accommodated in a box.

Fig. 9 is an outer view of the holder members.

Fig. 10 is a partially-sectional side view, of the holder members.

Fig. 11 is an inner view of the holder members.

Fig. 12 is a perspective view of an example of the flange members.

Fig. 13 is a perspective view the roll portion of the photosensitive material in which an other example of the light-shielding leader member is connected to the trailing end of the roll portion.

### DETAILED DESCRIPTION OF THE INVENTION

Hereinafter, the present invention will be explained in embodiments by referring figures.

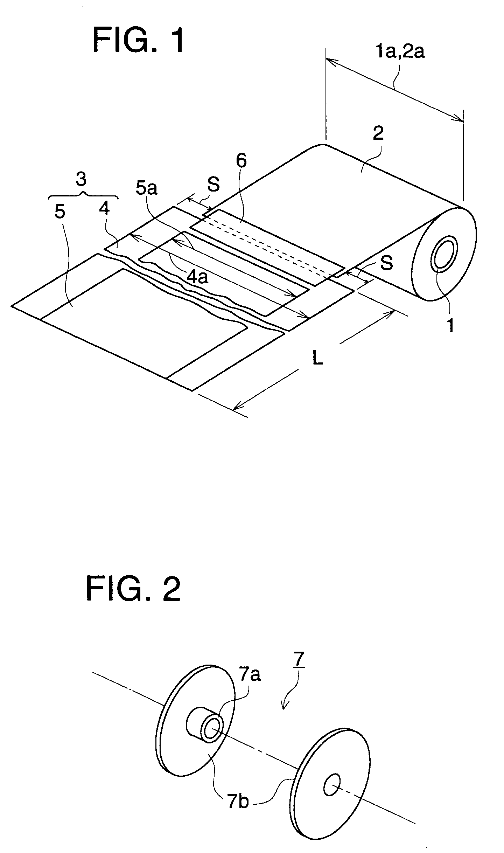

In the Figs. 1 through 7, 1 is the cylindrical core member made of a light-shielding paper tube or the like and 2 is the photosensitive material having width 2a which is mostly identical to the width 1a of the cylindrical core member. 3 is the light-shielding leader member in which the first heat reversible resin film member and the second heat reversible resin film member are put on top of one another and adhered to each other in respective to the center of their widths. The first heat reversible resin film member 4 has; width 4a which is wider than width 1a of the cylindrical core member and width 2a of the photosensitive material, more specifically, wider than the width of the roll portion; a thickness between 40 and 100 µm, tensile elastic modules between 1,800 and 5,000 kg/cm²; and light-shielding characteristics: the first heat reversible resin film member 4 is made of the material such as PE film. The second heat reversible resin film member 5 has; width 5a which is mostly identical to width 2a of the photosensitive material; a thickness between 15 and 50 µm; tensile elastic modules between 20,000 and 45,000 kg/cm²: the second heat reversible resin film member 5 is made of the material such as PET film. 6 is the adhesive sheet on one side of which adhesive is coated. 7 is a pair of flange members which is made of a light-shielding heat reversible resin, and consists of cylindrical boss portions 7a, inserted into the cavity of cylindrical core member 1, and flange portions 7b.

Flange members 7 are effectively produced by the vacuum forming method or the vacuum pneumatic forming method from a light-shielding heat reversible resin sheet, or by the injection molding method from a light-shielding heat reversible resin. It is necessary for flange members 7 to be composed of a heat reversible resin having bending strength not less than 250 kg/cm², tested in accordance with JISK-7203, or preferably not less than 400 kg/cm², and having the thickness of flange portions 7b between 0.3 and 1 mm or preferably between 0.4 and 0.8 mm. As the heat reversible resin of flange members 7, the materials such as PS, ABS, PC, acrylic resins, PA, PE, PP are preferably used.

If the aforementioned bending strength of the heat reversible resin is less than 250 kg/cm² or the thickness of flange portions 7b is thinner than 0.3 mm, flange portions 7b, which is protruded from the outer surface of the roll portion, is easy to be bent; therefore, it is difficult to completely shield the protruded portion of flange portions 7b with light-shielding leader member 3, it is easy for the leader member to be peeled off, and the weight pressure is applied to photosensitive material 2 when the package for a rolled photosensitive material is placed on a plane. Further, if the thickness of flange portions 7b is thicker than 1 mm, the productivity of flange members 7 is lowered and the capability to keep the accurate size thereof is unassured.

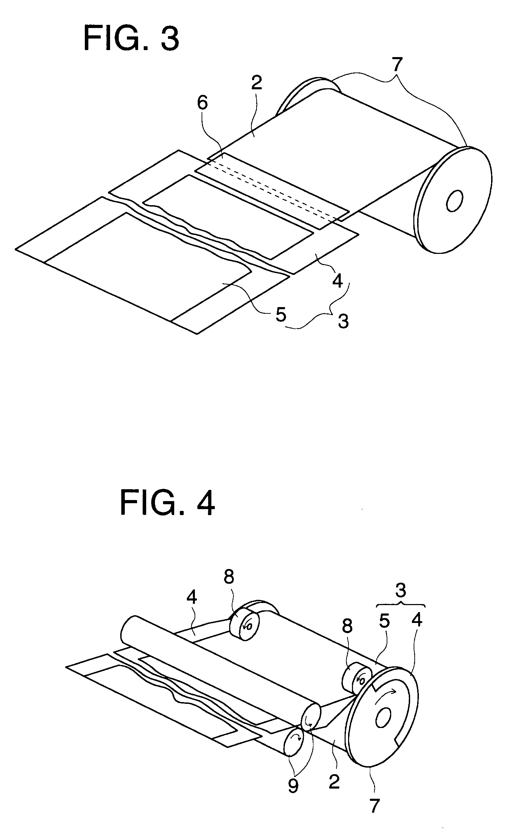

Photosensitive material 2 is wound around cylindrical core member 1 as shown in Fig. 1 in a dark room, and light-shielding leader member 3 is attached to the trailing end of photosensitive material 2 by means of adhesive sheet 6. Before or after the attachment of light-shielding leader member 3, flange members 7, shown in Fig. 2, are attached to the both ends of cylindrical core member 1 as shown in Fig. 3 in such a manner that cylindrical boss portions 7a are inserted into the cavity of cylindrical core member 1. The present invention is not limited to this procedure but it is possible that photosensitive material 2 is wound around cylindrical core member 1 to which flange members 7 are already attached.

Further, flange members 7 are produced not only by the vacuum forming method but also by the injection molding method. In the case of flange members 7 formed by the vacuum forming method, light leakage at the joint portions between flange members 7 and cylindrical core member 1 can be prevented when a black-colored vinyl chloride tape, having a thickness of 0.2 mm, is wound around the outer surface of cylindrical boss portions 7a and cylindrical boss portions 7a are inserted into the cavity of cylindrical core member 1; therefore, the qualitative package is obtained.

When the diameter of cylindrical boss portions 7a of flange members 7, on which the black-colored vinyl chloride tape is wound, is small in relation to the inside diameter of cylindrical core member 1, the space between cylindrical boss portions 7a and cylindrical core member 1 increases; therefore, the quality of the package is deteriorated because light leakage may occur and light-shielding leader member 3 may not be wound suitably as cylindrical boss portions 7a slip inside cylindrical core member 1.

On the other hand, when the diameter of cylindrical boss portions 7a of flange members 7, on which the black-colored vinyl chloride tape is wound, is large in relation to the inside diameter of cylindrical core member 1, light leakage may occur because the shape of cylindrical boss portions 7a is distorted as they are not smoothly inserted into the cavity of cylindrical core member 1. Therefore, the relationship between the inner diameter of cylindrical core member 1 and the diameter of cylindrical boss portions 7a is important. The production inefficiency of winding the black-colored vinyl chloride tape around flange members 7 and the limited allowance of the sizes for the inner diameter of cylindrical core member 1 and the diameter of cylindrical boss portions 7a should be the subjects to be improved when flange members 7 are produced according to the vacuum forming method.

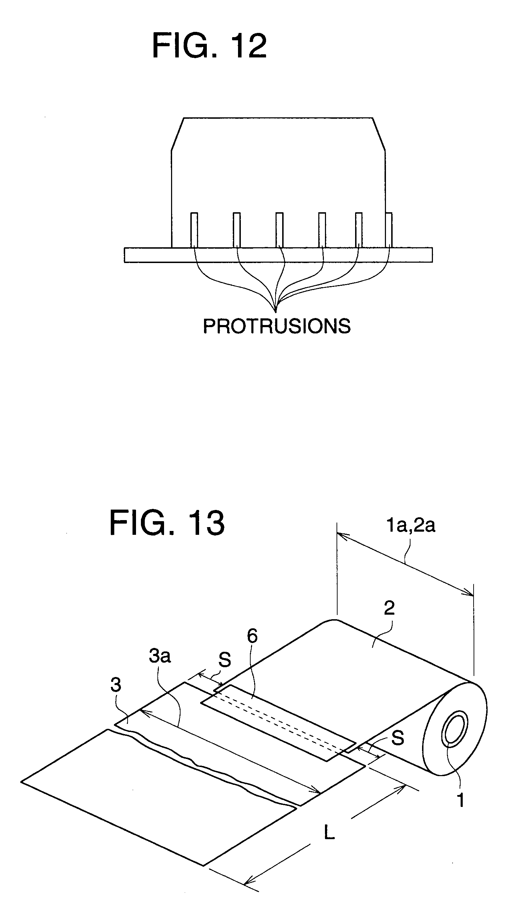

In the case of flange members 7 formed by the injection molding method, the above-mentioned problems can be solved because a complicated figure can be formed by the method. In other words, as shown in Fig. 12, plural protrusions may be provided at the base portion of cylindrical boss portions 7a in the formation of flange members 7 according to the injection molding method. As the protrusions are inserted into the cavity of cylindrical core member 1, the allowance of the sizes for the inner diameter of cylindrical core member 1 and the diameter of cylindrical boss portions 7a is increased so that preferable quality of the package is provided.

Cylindrical core member 1, which can obtain preferable quality, has the inner diameter between 51.7 and 51.8 mm while flange members 7 are formed by the vacuum forming method and have cylindrical boss portions 7a of which the diameter is 51.5 mm and on which a black-colored vinyl chloride tape, having a thickness of 0.2 mm, is wound for one round. On the contrary, cylindrical core member 1, which has the inner diameter of any size between 51.7 and 52.0 mm, results in a good condition while flame members 7 are formed by the injection molding method and have cylindrical boss portions 7a of which the diameter is 51.85 mm and on the outer surfaces of which twelve protrusions, having the width of 2 mm, the height of 7 mm, and the thickness of 0.2 mm, are provided at their base portions.

Flange portions 7b of flange members 7 are configured to have the diameter which is 2 to 10 mm, preferably 3 to 6 mm, and are extended beyond the outer surface of photosensitive material 2. When the extended portions of flange portions 7b are either less than 2 mm or more than 10 mm, it is difficult for light-shielding leader member 3 to cover flange portions 7b and to extend to the outer surface of flange portions 7b.

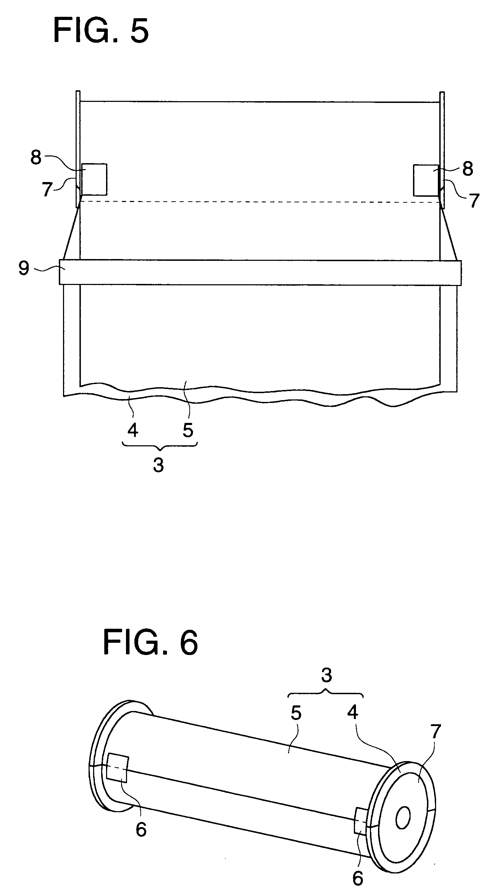

Next, as mentioned above, light-shielding leader member 3 is wound around photosensitive material 2 which is also wound around cylindrical core member 1 with flange members 7. In this case, as shown in Figs. 4 and 5, it is preferable to use pressure rollers 8 which apply pressure onto light-shielding leader member 3 from outer surface at the vicinities of inner sides of flange portions 7b, and to use nipping tension rollers 9 which apply tension onto light-shielding leader member 3 to be wound.

When light-shielding member 3 is wound around photosensitive material 2 with applying tension, the portions of the first heat reversible resin film member 4, which are S mm wider at each of the sides from width 1a of cylindrical core member 1 as shown in Fig. 1, cover flange portions 7b by extending from the inside surfaces thereof, which are protruded from the roll portion, crossing over the circumferential portions of flange portions 7b, and reaching to the outside surfaces of flange portions 7b for not less than 2 mm toward the center thereof as shown in Figs 4 and 5 in such a manner that the portions of the first heat reversible resin film member 4 are adhered onto flange portions 7b. If the portions of the first heat reversible resin film member 4, which extend to the outside surfaces of flange portions 7b, are less than 2 mm, it becomes easy for the portions to be peeled off and light leaks inside. Therefore, it is configured that the portions of S mm, at both side ends of the first heat reversible resin film member 4 in Fig. 1, cover flange portions 7b by reaching to the outside surfaces of the flange portions 7b for not less than 2 mm, preferably not less than 5 mm, from their circumferences toward their centers.

For the first heat reversible resin film member 4, it is necessary to be a heat reversible resin film, which has a thickness between 40 and 100 µm and tensile elastic modules between 1,500 and 5,000 kg/cm², to be adhered to flange portions 7b as mentioned above. If the thickness of the resin film member is thinner than 40 µm, light leakage caused by a break of the resin film member occurs easily: if the thickness is thicker than 100 µm, a covering operation of the resin film member over flange portions 7b is difficult. If tensile elastic modules are smaller than 1,500 kg/cm², a break of the resin film member caused by a partial extension occurs easily: if tensile elastic modules are larger than 5,000 kg/cm², a covering operation of the resin film member over flange portions 7b is difficult.

The objectives of the second heat reversible resin film member 5 are: that the resin film member is adhered suitably to the roll portion, in which photosensitive material 2 is rolled, by partially providing a stiffness of light-shielding leader member 3; and that the first heat reversible resin film member 4 is prevented from being elongated insufficiently in a longitudinal direction when a tension is applied to light-shielding leader member 3. Therefore, it is preferable that width 5a is within a range of ± 2 mm from width 2a of photosensitive material 2; and it is necessary for the second heat reversible resin film member 5 to consist of a heat reversible resin film of the thickness between 15 and 50 µm and tensile elastic modules between 20,000 and 45,000 kg/cm².

If the thickness of the second heat reversible resin film member 5 is thinner than 15 µm or tensile elastic modules thereof are smaller than 20,000 kg/cm², it is impossible to fulfill the above mentioned objectives. If the thickness of the resin film member is thicker than 50 µm or tensile elastic modules thereof are larger than 45,000 kg/cm², it is difficult for the first heat reversible resin film member 4 to cover and to adhere to flange portions 7b by extending to the outside surfaces of flange portions 7b because an application of tension upon the first heat reversible resin film member 4 is difficult.

For example, a configuration is assumed that: flange members 7 are formed by vacuum forming of a light-shielding PS sheet; the thickness of flange portions 7b is 0.5 mm; the diameter of flange portions 7b is protruded 6 mm from the outer surface of photosensitive material 2; the first heat reversible resin film member 4 of light-shielding leader member 3 consists of a light-shielding PE film having the width of 332 mm, the thickness of 60 µm, and tensile elastic modules of 2,800 kg/cm²; and the second heat reversible resin film member 5 consists of a PET film having the width of 310 mm, which is mostly identical to that of photosensitive material 2, the thickness of 25 µm, and tensile elastic modules of 35,000 kg/cm². In such the configuration, the first heat reversible resin film member 4 covers and adheres to flange portions 7b from their inside surfaces to their outside surfaces for about 8 mm extending beyond their circumferential portions toward their centers when a tension about 0.7 kg or greater is applied to light-shielding leader member 3. In this case, a skew of photosensitive material 2 occurs when it is wound around cylindrical core member 1; however, it is preferable that the width of cylindrical core member 1 is mostly identical to width 2a of photosensitive material 2, or 1 to 2 mm shorter for a margin, in order that the width of a rolled photosensitive material, to which flange members 7 are attached at both side ends, is limited as short as possible.

The embodiment of light-shielding leader member 3, which consists the first heat reversible resin film member 4 and the second heat reversible resin film member 5, has been explained above. However, it is also possible for light-shielding leader member to have the configuration which consists of single film member as shown in Fig. 13. In such the case, it is necessary for light-shielding leader member 3 to have the thickness between 40 and 300 µm and the tensile elastic modules of 1,300 and 5,000 kg/cm². If such the requirements are assured, the same effectivity as of the aforementioned embodiment can be obtained.

For example, a configuration is assumed that: flange members 7 are formed by vacuum forming of a light-shielding PS sheet; the thickness of flange portions 7b is 0.5 mm; the diameter of flange portions 7b is protruded 6 mm from the outer surface of photosensitive material 2; light-shielding leader member 3 consists of a light-shielding PE film having the width of 332 mm, the thickness of 100 µm, and tensile elastic modules of 2,000 kg/cm². In such the configuration, light-shielding leader member 3 covers and adheres to flange portions 7b from their inside surfaces to their outside surfaces for about 8 mm extending beyond their circumferential portions toward their centers when a tension about 0.7 kg or greater is applied to light-shielding leader member 3. In this case, a skew of photosensitive material 2 occurs when it is wound around cylindrical core member 1; however, it is preferable that the width of cylindrical core member 1 is mostly identical to width 2a of photosensitive material 2, or 1 to 2 mm shorter for a margin, in order that the width of a rolled photosensitive material, to which flange members 7 are attached at both side ends, is limited as short as possible.

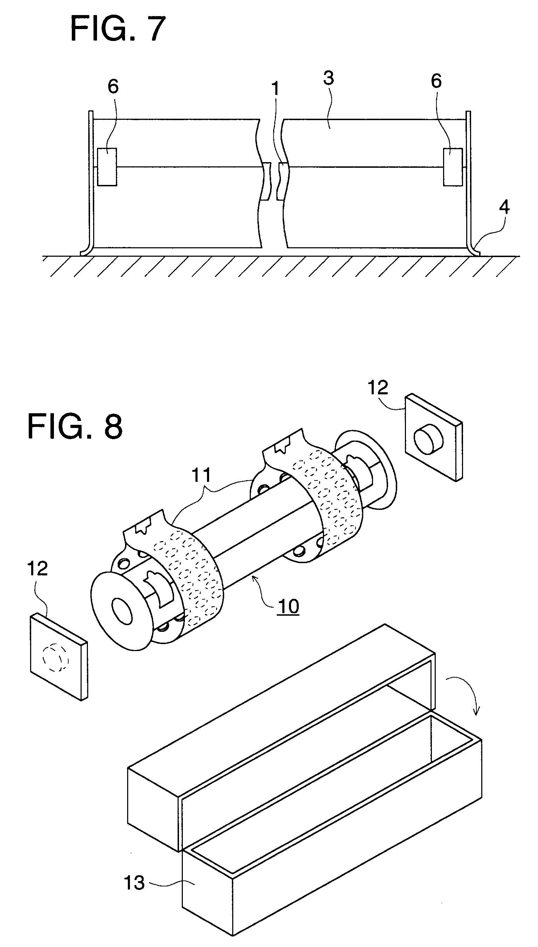

After the winding operation of light-shielding leader member 3 is finished, the trailing end of light-shielding leader member 3 is fixed to the outer surface of light-shielding leader member 3 itself, which is wound around photosensitive material 2, with adhesive sheet 6 as shown in Figs. 6 and 7. By this operation, the package for a rolled photosensitive material, according to the present invention, is obtained. The length L mm of light-shielding leader member 3, shown in Fig. 1, is set to the length to wind around the outer surface of photosensitive material 2 for not less than 1 round. The length L is preferable to wind around the outer surface of photosensitive material 2 for not less than 1.5 rounds or more preferable to wind for not less than 3 rounds.

The obtained package for a rolled photosensitive material is prevented from light leakage at the connection between light-shielding leader member 3 and flange portions 7b. The package for a rolled photosensitive material is also prevented form light leakage because: when the package is placed on a plane as shown in Fig. 7, the protrusions of flange portions 7b are flexibly bent so as to prevent photosensitive material 2 from the plane; flange portions 7b and the first heat reversible resin film member 4 of light-shielding leader member 3, which covers flange portions 7b, are prevented from a partial overload of pressure; flange portions 7b and the first heat reversible resin film member 4 are prevented from a break; photosensitive material 2 is prevented, of course form a scratch, and from a distortion of the shape and wrinkles; and the light-shielding by the first heat reversible resin film member 4 is prevented from peeling off. Especially, in the case that light-shielding leader member 3 is wound around photosensitive material for not less than 3 rounds and the first heat reversible resin film member 4 covers flange portions 7b to their outside surfaces for not less than 5 mm toward their centers, the package for a rolled photosensitive material is more effectively prevented from a break, peeling off of a light shield member, and light leakage.

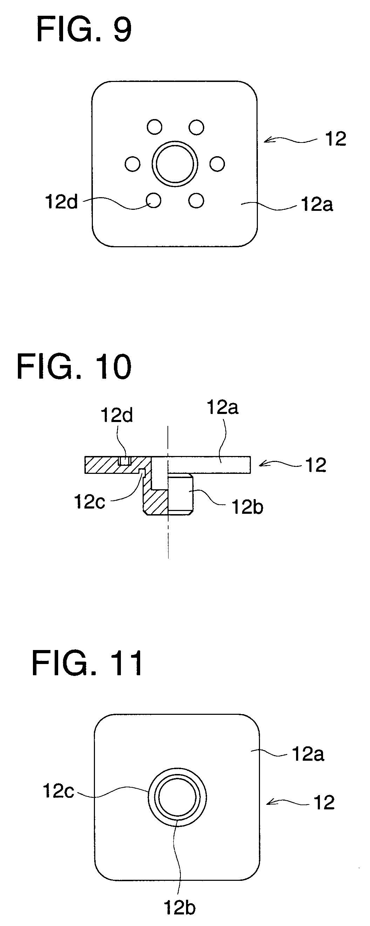

When the packages for a rolled photosensitive material of the present invention are transported and piled in a warehouse to be stored, it is preferable to accommodate them in boxes as shown in Fig. 8. In detail, air-filled cushion material 11 is wound around the outer surface of the rolled photosensitive material portion of the package for a rolled photosensitive material of the present invention; holder members 12, which consist of flat base portions 12a and short cylindrical protrusion portions 12b as shown in Fig. 9 in detail, are attached to the side ends of the package for a rolled photosensitive material 10 in such a manner that short cylindrical protrusion portions 12b are inserted into the cavities of cylindrical boss portions 7a. The package for a rolled photosensitive material 10 with holder members 12 is lifted up with air-filled cushion material 11 and accommodated in box 13.

It is preferable for air-filled cushion material 11 to have a flexible characteristic that partial overloading pressure is not applied onto photosensitive material 2 such as a polyethylene blister pack which can be obtained in the market. It is also preferable for air-filled cushion material 11 to have the thickness at the air-filled portion between 4 and 15 mm or more preferably between 8 and 15 mm. By this air-filled cushion material 11, photosensitive material 2 is protected from damage by external force and kept in a high quality condition even when the package for a rolled photosensitive material 10 is placed on a table or the like for a long period of time.

Holder members 12 are to prevent the package for a rolled photosensitive material 10 from contacting with an enclosure by means of flat base portions 12a, to prevent light-shielding leader member 3 and flange portions 7a of flange members 7 from damage in transportation and storage conditions, and further to prevent photosensitive material 2 from damage by external force. As mentioned previously, it is possible to prevent the roll portion from contacting with an enclosure in a static condition only by flange members 7; however, flange portions 7b are not thick enough to have the strength to keep the prevention in a transportation condition. Holder members 12 can be formed according to the methods of such as blow forming, vacuum forming, and injection molding. It is preferable in cost and productivity to produce holder members 12 from polyethylene by a blow forming method.

For holder members 12 in Fig. 9, circular dents are provided at base portions of short cylindrical protrusions 12b so that short cylindrical protrusions 12b can be smoothly and completely inserted into the cavities of cylindrical boss portions 7a. Further, attachment holes 12d, to be connected with a handle for lifting the package for a rolled photosensitive material, are provided on the surfaces of flat base portions 12a which are opposite to the ones on which short cylindrical protrusion portions 12b are provided. Holder members 12 are not limited to the configuration of the example in the figures. It is only required that the package for a rolled photosensitive material is prevented from damage when the package is accommodated in a box or the like and transported; therefore, holder members 12 only need to have the protruded portions which has a wider diameter than that of flange member 7 and enough strength to support the weight of the package for a rolled photosensitive material, and need to be fixed to flange members 7 at the side ends of the package for a rolled photosensitive material.

It is obvious that the present invention is not limited to the configurations either that the cylindrical core member is a paper tube or that flange members and films of light-shielding leader member are made only of the heat reversible resins described in the specification.

The package for a rolled photosensitive material of the present invention provides the remarkable effects that its production is easy, light-shield and protection characteristics for a photosensitive material are advantageous, and a photosensitive material is drawn from the package easily and smoothly in a high quality condition.

## Claims

1. A package for a rolled photosensitive material, comprising:
a cylindrical core member, made of a light-shielding material;
a photosensitive material, rolled on said cylindrical core member, for forming a roll portion;
a pair of flange members, fixed on side ends of said cylindrical core member, for preventing said roll portion from an exposure with light; and
a leader member for winding around said roll portion;
wherein said leader member includes:
a first heat reversible resin film member which has a wider width than that of said roll portion, a thickness between 40 and 100 µm, light-shielding characteristics, and tensible elastic modules between 1,800 and 5,000 kg/cm²; and
a second heat reversible resin film member which has a same width as that of said roll portion, a thickness between 15 and 50 µm, and tensile elastic modules between 20,000 and 45,000 kg/cm²;
wherein said leader member is connected to a trailing end of said photosensitive material, and said leader member is wound around said roll portion so that said first heat reversible resin film member covers a circumference of said flange members and extends to outer surfaces of said flange members for not less than 2 mm.

2. The package of claim 1, wherein a thickness of portions of said flange members, which protrude from a circumferential part of said roll portion, is between 0.3 and 1.0 mm, said flange members have a bending strength not less than 250 kg/cm², and said flange members are made of a heat reversible resin.

3. The package of claim 1, wherein said cylindrical core member, said photosensitive material, and said pair of flange members form a rolled photosensitive material body.

4. The package of claim 1, wherein said leader member has a length at least 1.5 times longer than a circumferential length of said roll portion.

5. The package of claim 1, wherein a height of portions of said flange members, which protrude from a circumferential part of said roll portion, is not more than 10 mm.

6. The package of claim 1, wherein said cylindrical core member is made of paper, said first heat reversible resin film member is made of a PE film, and said second heat reversible resin film member is made of a PET film.

7. The package of claim 1, further comprising:
an air-filled cushion material for winding around an outer surface of said leader member which is wound around said roll portion.

8. A package for a rolled photosensitive material, comprising:
a cylindrical core member, made of a light-shielding material;
a photosensitive material, rolled on said cylindrical core member, for forming a roll portion;
a pair of flange members, fixed on side ends of said cylindrical core member, for preventing said roll portion from an exposure with light; and
a heat reversible resin film member for winding around said roll portion; wherein said heat reversible resin film member which has a wider width than that of said roll portion, a thickness between 40 and 300 µm, light-shielding characteristics, and tensible elastic modules between 1,300 and 5,000 kg/cm²;
wherein said heat reversible resin film member is connected to a trailing end of said photosensitive material so as to cover a circumference of said flange members and extends to outer surfaces of said flange members for not less than 2 mm.

9. The package of claim 8, wherein a thickness of portions of said flange members, which protrude from a circumferential part of said roll portion, is between 0.3 and 1.0 mm, said flange members have a bending strength not less than 250 kg/cm², and said flange members are made of a heat reversible resin.

10. The package of claim 8, wherein said cylindrical core member, said photosensitive material, and said pair of flange members form a rolled photosensitive material body.

11. The package of claim 8, wherein said heat reversible resin film member has a length at least 1.5 times longer than a circumferential length of said roll portion.

12. The package of claim 8, wherein a height of portions of said flange members, which protrude from a circumferential part of said roll portion, is not more than 10 mm.

13. The package of claim 8, wherein said cylindrical core member is made of paper, said heat reversible resin film member is made of a PE film.

14. The package of claim 8, further comprising:
an air-filled cushion material for winding around an outer surface of said heat reversible resin film member which is wound around said roll portion.
